# EUROPEAN PATENT SPECIFICATION

(11) **EP 4 175 744 B1**
(45) Date of publication and mention of the grant of the patent: **25.09.2024**
(21) Application number: 21739329.7
(22) Date of filing: 01.07.2021
(51) Int. Cl.: B01J 19/00

(54) **SYSTEM FOR PRESSURISING PARALLEL BATCH REACTORS AND METHOD OF USING SUCH**
SYSTEM ZUR DRUCKBEAUFSCHLAGUNG VON PARALLELEN CHARGENREAKTOREN UND VERFAHREN ZUR VERWENDUNG DAVON
SYSTÈME DE PRESSURISATION DE RÉACTEURS À FONCTIONNEMENT DISCONTINU EN PARALLÈLE ET PROCÉDÉ D'UTILISATION D'UN TEL SYSTÈME

(30) Priority: 02.07.2020 EP 20183748
(43) Date of publication of application: 10.05.2023
(73) Proprietor: Avantium Technologies B.V., 1014 BV Amsterdam (NL)
(72) Inventor: NIJBACKER, Tom, 1014 BV Amsterdam (NL); DE GRAAF, Robbert Arnold, 1014 BV Amsterdam (NL)
(74) Representative: Avantium Intellectual Property
(86) International application number: PCT/EP2021/068167
(87) International publication number: WO 2022/003101

(56) References cited:
- WO-A1-2008/121819
- US-A- 3 693 455
- US-A- 5 709 840
- US-A- 6 045 755
- US-A1- 2003 199 099
- US-B2- 8 425 848
- STEWART H N M ET AL: "Liquid adsorption chromatography in columns and on thin layers", JOURNAL OF CHROMATOGRAPHY A, ELSEVIER, AMSTERDAM, NL, vol. 38, 1 January 1968 (1968-01-01), pages 209 - 223, XP026712042, ISSN: 0021-9673, [retrieved on 19680101], DOI: 10.1016/0021-9673(68)85031-9
- N.N: "SGE Syringe Selection Guide", SGE SYRINGE SELECTION GUIDE, 31 May 2010 (2010-05-31), pages 1 - 88, XP055752609, Retrieved from the Internet <URL:http://www.isil.co.il/files/catalog/item/src/SGE-syringes-CATALOG.pdf> [retrieved on 20201120]
- ANONYMOUS: "Syringe Selection Guide Complete Guide to Selecting the Right Specialty Syringes for Your Application", HAMILTON, 1 January 2017 (2017-01-01), XP055659415, Retrieved from the Internet <URL:https://craft-labs.s3.amazonaws.com/File-Uploads/Syringe_Selection-Guide.pdf?mtime=20180525150910> [retrieved on 20200120]

## Description

### Introduction

The invention relates to a system for pressurising parallel batch reactors, and a process for using such to pressurize batch reactors to a pressure of between 20 and 150 barg. More specifically, said batch reactors have a specific closing system. The reactors are closed by a removable reactor closure system for covering the mouth of such reactor, wherein the closure system comprises an elastomeric septum and a rigid member with a small hole covering the septum. The septum may be pierced with a specific hollow needle, e.g. to force pressurized gas in the reactor. The closure system does not require moving parts.

### Background of the invention

Systems for performing parallel reactions on small scale are desired for high throughput screening. Such screening is done e.g. in research on heterogeneous catalysts. These systems for performing parallel reactions and the way they operate are e.g. set out in WO2005063372. However, the system described in the latter is a system with multiple flow-through reactors. That may suit many purposes, but for some purposes testing in batch reactors would be desired, in particular a system with multiple small batch reactors. For some purposes it would also be desired that in such batch reactors reactions can be performed under elevated (i.e. higher than atmospheric) pressure.

A system for such is proposed in US 8,425,848. Herein, a multi-chamber reactor comprises an outer chamber and at least one inner chamber, wherein the at least one inner chamber is formed by a reactor/liner, which is closed by a closure, in particular a septum or a disk that can be penetrated with a needle, and the outer chamber is an autoclave, wherein the autoclave is composed of an autoclave body and an autoclave cover, wherein the autoclave cover has at least one first opening for a needle, and preferably a second opening, which opens into the outer chamber. Said multi-chamber reactor is suited for carrying out reactions with positive or negative pressure and under complete exclusion of air and/or moisture. The disadvantage of this system is that it requires a gasket and/or a thread lock to ensure a pressure-tight closure, a separate gas lead for pressurising the reactor content and o-rings for closure, which makes it a complex system. Also, it does not allow pressure build-up during a reaction as the glass vial in the autoclave will burst.

Another system for such is proposed in EP1260267. In this reference, there are multiple reactors for performing batch reactions, wherein the system has a valve per reactor (paragraph 0038) and/or O-rings per reactor (paragraph 0187).

US 2003/202911 discloses a system with individual reactors, but which reactors have a common (i.e. shared) headspace. In such system first of all the gas of one reactor can influence the reaction occurring in the other reactor, but more importantly no gaseous reaction products can be analysed for each individual reaction. Also, each reactor requires its own O-ring to be closed off.

WO2008/143739 discloses a parallel batch reactor system for effecting chemical reactions. The system disclosed in this reference comprises per reactor a check valve (72) configured to transfer pressurized fluid to the reactor vessels and individually seal the reactor vessels, and injector/sampling valves (74) operable to receive and transfer chemical components to and from the reactor vessels. The check valves in this system are interconnected by a series of passageways. The latter means that all reactors have the same initial pressure. The latter can be a disadvantage when wishing to do comparative testing at different pressures. Furthermore, the system of this reference is very complex with many different parts.

EP 1258285 discloses an apparatus for performing multiple batch reactors for research purposes. The apparatus contains a pressure-proof vessel (preferably an autoclave) which contains multiple single reactors (reactor vials). The disadvantages of such system is that all reactors (vials) operate under the same pressure for a given trial (the pressure in the pressure-proof chamber), making it unattractive for many comparative tests, and also that if in one reactor a lot of gas is produced it will leak or spill into the pressure-proof chamber or other reactor vials.

US 5,441,700 deals with headspace analyses using gas chromatography, wherein samples are taken using a syringe.

US 6,045,755 discloses several types of small batch reactors and closure systems. It describes in figures 11A and 11B reactors that are closed off with a septum and a cap with a hole. It is not stated which pressures such system can withstand, but it is reported (column 25) that for withstanding higher pressures and alternative system is required, which is set out in figures 12A and 12B. This system of figure 12 contains a compressible collar (323) in between two septa. This may work, but the compressible collar needs to be operated, e.g. by pneumatic or mechanical force to close, and is a moving object. This nature (both that it is a moving object as well as that it requires mechanical or pneumatic operation) makes the system complex, both to build and operate, and thus expensive, and less attractive, especially when wishing to use such for large numbers of reactors.

A key part for the above parallel batch reactors is being able for performing reactions under pressure (e.g. reactions with partly gaseous reactants under pressure). Form the above prior art it is clear that although various systems exist for performing parallel batch reactions, in some systems the reactors share a headspace, which is undesired (e.g. cross contamination). Other systems are quite complex, either because they requiring many parts, and/or because they require movable (i.e. not static) parts. A key step for many reactors is that they can be pressurised easily and can maintain their pressure for a prolonged time.

Hence, there is still a desire for a system for pressurising parallel batch reactors and which reactors can maintain their pressure, which system should be simple, with no moving parts for pressurising the reactor. It is desired that in such way, sets of reactors (e.g. in a rack) can be pressurized by a system, and which rack can be taken out of the system e.g. to be transported, taken in or out of a glove box, etcetera. It is also desired that when used in chemical reactions, there is no fluid (liquid and gas) connection between the reactors (i.e. that the contents are isolated form one reactor to the other, i.e. no common headspace when in operation. The system should be such that the reactors pressurized are able to maintain (a relevant) elevated pressure (e.g. up to 100 barg) in each reactor for a relevant time (e.g. 8 hours to 12 hours) with minimal leaking. The system should also allow for some pressure build-up (e.g. starting pressure plus build-up to a total of 100 barg) in individual reactors due to the experiment that is carried out, without risk of reactors collapsing or leaking. It is desired that the system should be able to maintain pressures of at least 20 barg, preferably at least 30 barg, more preferably at least 40 bar g for at least 10 minutes after being pressurized with nitrogen, and even more desired such times are maintained after pressurising with hydrogen. It is furthermore desired that reactors can be heated and/or stirred. The desire for reduced complexity means no need for O-rings, as such are prone to leakage and wear. For the same reason, there are minimal valves for handling gas in the system. The system preferably should be such that of each reactor at the end of the reaction performed the liquid and gaseous content of each reactor can individually be analysed.

The desire for "no moving parts" is that systems with moving parts are complex to manufacture and/or complex to operate, especially when operating a large number of individual reactors in parallel, and will need more (complex) maintenance.

### Summary of the invention

It has now been found that the above objective can be met, at least in part, by (using) a system for pressurising parallel batch reactors, which system comprises a plurality of reactors and at least one movable hollow needle connectable to a pressure source, wherein a reactor comprises:
- a reactor body having a volume of 0.5-50 ml and a reactor mouth with a diameter of between 2 and 30 mm;
- a removable reactor closure system for covering said reactor mouth;
and wherein said hollow needle has an outer diameter of 2 millimeter or less, and which hollow needle has an opening of the inner canal of the needle, which opening is located at the lateral side of the needle at a distance from the tip of the needle equal or larger than the diameter of the needle, to at most 5 cm from the tip of the needle, wherein the removable reactor closure system for covering said reactor mouth comprises:
- an elastomeric septum having a thickness of at least 200% of the diameter of the hollow needle,
- and a rigid member covering the septum at the reactor mouth except for an opening in the rigid member leaving the septum exposed to the atmosphere, which opening has a diameter of not more than 200% of the diameter of the hollow needle,
wherein the removable reactor closure system comprises no moving parts, and wherein the elastomeric septum has a Shore A hardness of less than 75.

In an embodiment, the above objective can be met by a system according to claim 1, wherein the removable reactor closure system contains no parts other than the septum and the rigid member and fastening means for the rigid member.

More specifically, it was found that an elastomeric septum can hold a reactor under pressure closed even if a small area of such septum is exposed to the surroundings (atmospheric pressure) and the septum is held in place by a rigid member, provided that some critical parts like the septum thickness, diameter of the hollow needle, diameter of the rigid covering member holding the septum in place, and the relationship between these dimensions are chosen right.

The invention further relates to a process for performing batch reactions in parallel, which reactions occur under pressurized atmosphere, wherein a plurality of batch reactors is pressurized with the system according to this invention, and wherein the pressure in the pressurized reactors is between 10 and 150 barg.

### Detailed description of the invention

"The removable reactor closure system comprises no moving parts" is herein to be understood that the removable reactor closure system contains no rigid parts that move or are moved from one position when open for pressurising the reactor to a different position when closed after pressurising the reactor. Examples of closure systems with moving parts are valves and screw caps. Consequently, "moving parts" herein are rigid parts that move or are moved from one position when open to a different position when closed before and after pressurising.

"Pressurized" herein is to be understood as at pressure higher than ambient pressure (which is herein 101.3 kPa).

"Atmospheric pressure" is herein to be understood as the pressure to which the system according to the present invention is exposed, which does not involve an autoclave containing the system, and which is the same pressure that the operator of the system is exposed when operating the system.

"Ambient conditions" herein is to be understood as a pressure of 101.3 kPa at a temperature of 20°C. Herein, "thickness of at least 200% of the diameter of the hollow needle" means a thickness of at least twice that of the hollow needle. Likewise, "thickness of at least 300% of the diameter of the hollow needle" herein means a thickness of at least three times that of the hollow needle, and so forth for other percentages on sizes.

At the start of a session of performing (parallel) reactions, the reactor body or reactor bodies of the system of the present invention can be filled (fully or partially) with liquids, e.g. reagents, solvents, catalysts, etcetera, suitably when the (removable) reactor closure is not in place (i.e. not on the reactor), through the reactor mouth of each reactor. In such state the reactor mouths are open to the environment (incl. pressure). Also, solid particulates (e.g. reagents, catalysts, magnetic stirring devices) may be entered into the reactor bodies in the same way. Thereafter, the reactor bodies may be closed with the elastomeric septum (one per reactor, or larger ones covering the mouths of multiple or all of the reactor bodies) and the rigid member (again, it may be one per reactor, or larger ones covering the mouths of multiple or all of the reactor bodies, preferably one closing off all), all having the dimensions as specified.

After the reactor bodies thus have been filled with desired solid and/or liquid constituents and closed, the reactors may be pressurized with gas by inserting the hollow needle as specified through which gas can be forced into the reactors, after which the needle can be withdrawn. The same needle can be used for multiple reactors, wherein the needle may be moved by hand or by robotic movement to a next rigid member opening. If so desired, multiple needles may also be used, e.g. one per row of reactors or one per reactor. It was found, surprisingly, that by using the system according to this invention, reactors may be pressurized to a representative pressure, and such reactors can stay pressurized for a time sufficient for representative experiments to be carried out, e.g. up to 100 barg for at least 8 hours, or even longer.

It was surprisingly found that the aim of the present invention can be achieved if both the elements of the closure system of the reactors are of the dimensions as specified, and the hollow needle that is used for penetrating the septum has a size and design as specified. It is in fact surprising that reactors can be pressurised up to high pressures of e.g. up to 100 barg by penetrating the septum with the specified hollow needle, the needle can be withdrawn, and the pierced septum can still hold the pressure for substantial time. The latter is contrary to existing belief, e.g. as expressed by US 6,045,755, in which the system of figure 11 is used for some applications, but in applications requiring higher pressures (see column 25 line 223 and further) the system of figure 12 is required. The system of figure 12 contains a collar which, after piercing a septum, is moved such as to close off the reactor vial. The present inventors have found that such complex equipment: the collar needs to be moved from the open position in figure 12A to the closed position in figure 12B, and this additional equipment for making this collar movement is not shown or described. Hence, the now claimed system has considerable advantages in that the removable reactor closure system comprises no moving parts. The present invention also encompasses an embodiment in which the removable reactor closure system comprises no moving parts, and contains no parts other than the septum and the rigid member and fastening means for the rigid member.

Hence, the invention further relates to a system for pressurising parallel batch reactors, which system comprises a plurality of reactors and at least one movable hollow needle connectable to a pressure source, wherein a reactor comprises:
- a reactor body having a volume of 0.5-50 ml and a reactor mouth with a diameter of between 2 and 30 mm;
- a removable reactor closure system for covering said reactor mouth;

and wherein said hollow needle has an outer diameter of 2 millimeter or less, and which hollow needle has an opening of the inner canal of the needle, which opening is located at the lateral side of the needle at a distance from the tip of the needle equal or larger than the diameter of the needle, to at most 5 cm from the tip of the needle, wherein the removable reactor closure system for covering said reactor mouth comprises:
   - an elastomeric septum having a thickness of at least 200% of the diameter of the hollow needle,
   - and a rigid member covering the septum at the reactor mouth except for an opening in the rigid member leaving the septum exposed to the atmosphere, which opening has a diameter of not more than 200% of the diameter of the hollow needle,
wherein the removable reactor closure system comprises no moving parts, and wherein the removable reactor closure system contains no parts other than the septum and the rigid member and fastening means for the rigid member.

Depending in the pressures to be maintained, it is preferred that the movable hollow needle has a diameter of less than 1.5 mm, preferably less than 1 mm. The specific design of the needle (apart from the correct dimensions an example is also shown in figure 11A/B of US 6,045,755) are known mostly from medical applications, and come in various specific designs. Preferred in this context is that the needle is of the type of a Gertie-Marx needle, Sprotte needle or Whitacre needle.

Clearly, of such needle the end of it, including the opening to the side of the tip, should be able to reach the reactor through the reactor mouth, and then in order to pressurize the reactors the other end of the canal should be connected or be connectable to a source of pressurized gas. Apart from pressurising, the needle may also be used to take liquid samples from the reactor content. To achieve such, it is preferred in the system according to the present invention, that the end of the needle opposite the point of the needle is connectable (preferably connected) to a pressurized gas source and/or a device for sampling and/or analyzing gaseous or liquid samples.

The elastomeric septum in the system according to the invention may be one for each reactor, or it may be a larger one covering off multiple or even all reactor mouths. The elastomeric septum used in the present invention may be a commercial one, depending on the reaction environment, and are known in the art. Suitable elastomeric septum for this purpose may be made of e.g. a silicone rubber, a fluoropolymer, a synthetic rubber, or made of perfluoroelastomer polymer as marketed under the brand Kalrez (Dupont) and the septum may be coated with a polymer like PTFE. Examples of fluoropolymers in this connection include elastomers of the family comprising copolymers of hexafluoropropylene (HFP), vinylidene fluoride (VDF or VF2), terpolymers of tetrafluoroethylene (TFE), vinylidene fluoride (VDF) and hexafluoropropylene (HFP) and perfluoromethylvinylether (PMVE), and examples of these are marketed under the Viton brand (The Chemours Company). As mentioned, the septum should have a thickness of at least 200% of the diameter of the hollow needle (i.e. a thickness of at least twice the size of the diameter of the hollow needle). Within that requirement, depending on the diameter of the needle, the elastomeric septum in the present invention preferably has a thickness of at between 2 mm and 10 mm, more preferably between 3 and 6 mm (but in any case at least twice the diameter of the needle), in order to be pierced to raise the pressure, yet close off the septum after withdrawal of the needle after pressurising. Also, it is preferred that the elastomeric septum has a thickness of between 300 and 800% of the diameter of the hollow needle (i.e. a thickness of three to eight times the diameter of the needle). For the septum in the present invention, it is preferred that the elastomeric septum has a Shore A hardness of less than^ 73.

The specific choice for the thickness of the septum and the septum material will depend of the nature of the chemical reaction envisaged: how aggressive or reactive the medium is, what the desired or expected pressure will be, the duration of the experiment, the number of times the septum is intended to be pierced, and the person of average skill in the art will have no trouble testing a septum. The latter is also due to the fact that the equipment is simple and cheap to operate, so some experiments to arrive at the desired septum design (e.g. material and thickness) but also size of needle and the diameter of the opening of rigid member may easily be done. The septum or septa covering the reactors will ensure that no fluid can flow from one reactor to another reactor when the system is in use.

In the system according to the present invention as set out herein, it is stated that the reactor mouth should have an opening with a diameter of between 2 and 30 mm: the word diameter seems to suggest that the is circular, and although such is a logical shape, the opening can in fact it can have any shape. Preferably this diameter is between 5 and 26 mm, more preferably between 8 and 26 mm.

The opening in the rigid member or reactor body cover will be smaller than the opening of the reactor mouth, and larger than the diameter of the needle that is intended to be used to pierce the septum. Hence, the opening in the rigid member preferably has a diameter of not more than 150% of the diameter of the hollow needle, preferably not more than 130% of the diameter of the needle.

The system is preferably free of O-rings and/or a thread lock as such are cumbersome in use and prone to wear and tear.

The system is designed having in mind performing multiple parallel reactions, typically done in chemical research, for e.g. comparing the influence of catalysts, concentrations of reactions, and even different pressures. In particular the latter sets it apart from systems with multiple small batch reactors in which all batch reactors are placed in one pressurized autoclave (in which all reactors work at the same pressure). The system according to the present invention therefore preferably comprises at least 4 reactors, even more preferably at least 8 reactors, or more.

Since the individual reactors are pressurized in use, they should be capable of withstanding substantial pressures, e.g. up to 150 barg. At the same time, the reactor wall is preferably inert, smooth, and easy to clean. Hence, it may be preferred in the present invention that each reactor comprises a rigid reactor body capable of withstanding pressures of up to 150 barg and optionally a liner made of glass, quartz or polymeric material, preferably the polymeric material being PEEK, PVC, or a fluorinated polymer. When equipped with such a liner, the rigid container can be made of relatively inexpensive pressure-resistant material, yet the wall of the reactor is highly inert and easy to clean. It also allows taking out the liners for further analysis and replacing them with new liners, so that the equipment can quickly be used again for next experiment, whilst the liners with reactants can be used to temporarily store the (non-gaseous) reactants.

It is preferred that the system according to the present invention is such that each batch reactor can maintain a pressure of at least 20 barg for at least 10 minutes, preferably a pressure of at least 30 barg for 10 minutes, more preferably at least 40 barg for 10 minutes, when pressurized tested with nitrogen. Even more preferably, such values are obtained when pressurising with hydrogen. Hydrogen is more challenging in this respect, as leaks show earlier with nitrogen than with hydrogen. Typically, a gaseous atmosphere of solely nitrogen will not be used when utilizing the system, but it is taken as a basic measure.

For performing the reactions it may be preferred that the reactors are equipped with a stirring device. Suitably this can be achieved with known magnetic stirrers or orbital shakers or other. Also, the reactors may be placed in a joint or individual heating block for heating and/or regulating the temperature. Hence, it is preferred that the reactors further comprising a heating device for heating the reactors and/or a stirring device, preferably magnetic strring device or orbital shaker. In using the system according to the present invention it may be preferred that components are designed such that the reactor is heated during at least part of the process to a temperature of 100-300°C and/or stirred.

In operating the system according to the present invention, it may be preferred that prior to the pressure being released and after the reaction has proceeded to a desired degree a sample is taken from the gaseous or liquid phase in the reactor by piercing the septum with a hollow needle, and said gaseous or liquid sample is transported to a device for analyzing gas and/or liquid compositions.

The invention further relates to a process for performing batch reactions in parallel, which reactions occur under pressurized atmosphere, wherein a plurality of batch reactors is pressurized with the system according to the present invention and as set out above, and wherein the pressure in the pressurized reactors is between 20 and 150 barg, preferably between 30 and 120 barg, more preferably between 40 and 100 barg. In such process, it is preferred that after the pressurising the reactors, the contents of the reactors are heated to induce chemical reaction inside the reactors, followed by sample-taking from the reactor content using a hollow needle which has an outer diameter of 2 millimeter or less, and which hollow needle has an opening of the inner canal of the needle, which opening is located at the lateral side of the needle at a distance from the tip of the needle equal or larger than the diameter of the needle, to at most 5 cm from the tip of the needle, and which needle enters the reactor via the septum.

### Example

### Example 1

A reactor vessel (stainless steel) was tested for leak rate after installing a pressure sensor as part of the reactor to be able to continuously monitor the gas pressure inside the reactor.

The reactor had a volume of about 9.5 ml, and was equipped with tubing at the bottom connected to a pressure sensor. Outer diameter of the flange of each reactor: 17.9 mm, inner diameter of the flange: 13.2 mm.

The reactor mouth was closed first with a elastomeric septum (17.2 mm diameter, 3.4 mm thickness, Viton base material with a PTFE coating of 0.2 mm facing the reactor), and closed off with a cover plate (stainless steel) pressing the septum onto the reactor. The coverplate plate had a hole with a diameter of 1.0 mm.

The reactor was closed (with intact septum and cover plate) at atmospheric pressure, and subsequently pressurized by inserting a needle through the hole in the coverplate and subsequently through the septa. The septum was pierced by the needle. The needle was a custom-made hollow needle (stainless steel, diameter 0.79 mm) with an opening (oval, 1x0.25 mm) to the side of the tip of the needle, and is of a similar kind as used in spinal tap medical treatment.

The end of the needle not inserted into the reactor was connected to a source of pressurized gas (formergas, containing 90% nitrogen and 10% hydrogen) , and the reactor was pressurized by letting into the reactor the pressurized gas through the needle and through the opening in the coverplate and the pierced septum, to a pressure of about 100 barg.

After the reactor was pressurized, the needle was removed after which the pressure was monitored in time. The reactor was kept at room temperature.

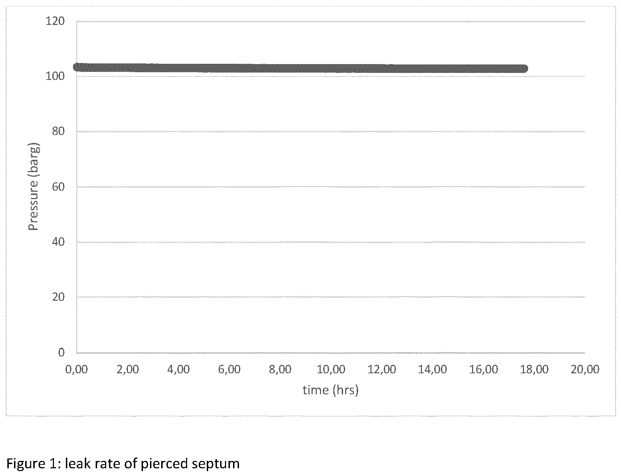

The result was that the pressure was well kept for the period of measurement (16 hours), only a very small amount of gas was leaking from the reactor. The leak rate measured was: 0.04 bar / hr, equal to 0.04 % of a reactor operated at 100 barg. A graph of the pressure in the reactor for 16 hours is in figure 1.

### Example 2

In a set-up for 12 reactors as in example 1 in parallel the pressure was simultaneously monitored over time, twice, comparing two different septa of different hardness. One set of septa had a Shore A hardness of 72, the other a Shore A hardness of 77.

The septum was for both trials Viton FPM/FKN of thickness 3.3, with a liner of 0.2 mm teflon at the inside. The reactors were pressurized by inserting a needle (same needle as example 1) to 40 barg with (100%) hydrogen gas, and withdrawing the needle. After 10 minutes the pressure inside each reactor was measured. The results are set out in table 1.

**Table 1: comparing septa with different hardness**

| Reactor Vessel | 72 Shore Pressure (barg) | 77 Shore Pressure (barg) |
|---|---|---|
| 1 | 40 | 38 |
| 2 | 40 | 38 |
| 3 | 40 | 29 |
| 4 | 40 | 36 |
| 5 | 40 | 36 |
| 6 | 40 | 22 |
| 7 | 40 | 35 |
| 8 | 39 | 13 |
| 9 | 40 | 17 |
| 10 | 39 | 37 |
| 11 | 40 | 36 |
| 12 | 40 | 29 |

The results in table shows that the vessels equipped with the septum having a Shore A hardness of 72 (more flexible) was less likely to be prone to leaking, when using pure hydrogen, than a septum having a Shore A hardness of 77 (stiffer, tougher). It should be noted that any leakage shows much quicker with hydrogen than with nitrogen.

## Claims

1. System for pressurising parallel batch reactors, which system comprises a plurality of reactors and at least one movable hollow needle connectable to a pressure source, wherein a reactor comprises:
- a reactor body having a volume of 0.5-50 ml and a reactor mouth with a diameter of between 2 and 30 mm;
- a removable reactor closure system for covering said reactor mouth;
and wherein said hollow needle has an outer diameter of 2 millimeter or less, and which hollow needle has an opening of the inner canal of the needle, which opening is located at the lateral side of the needle at a distance from the tip of the needle equal or larger than the diameter of the needle, to at most 5 cm from the tip of the needle,
wherein the removable reactor closure system for covering said reactor mouth comprises:
- an elastomeric septum having a thickness of at least 200% of the diameter of the hollow needle,
- and a rigid member covering the septum at the reactor mouth except for an opening in the rigid member leaving the septum exposed to the atmosphere, which opening has a diameter of not more than 200% of the diameter of the hollow needle,
wherein the removable reactor closure system comprises no moving parts, and wherein the elastomeric septum has a Shore A hardness of less than 75.

2. System according to claim 1, removable closure system contains no rigid parts that move or are moved from one position when open for pressurising the reactor to a different position when closed after pressurising the reactor.

3. System according to claim 1 or claim 2, wherein the removable reactor closure system contains no parts other than the septum and the rigid member and fastening means for the rigid member.

4. System according to any of the preceding claims, wherein the movable hollow needle has a diameter of less than 1.5 mm, preferably less than 1 mm.

5. System according to any of the preceding claims, wherein the needle is a Gertie-Marx needle, Sprotte needle or Whitacre needle.

6. System according to any of the preceding claims, wherein the end of the needle opposite the point of the needle is connectable to a pressurized gas source and/or a device for sampling and/or analyzing gaseous or liquid samples.

7. System according to any of the preceding claims, wherein the elastomeric septum has a thickness of between 300 and 800% of the diameter of the hollow needle.

8. System according to any of the preceding claims, wherein the elastomeric septum has a thickness of at between 2 mm and 10 mm, preferably between 3 and 6 mm.

9. System according to any of the preceding claims, wherein the elastomeric septum has a Shore A hardness of less than 73.

10. System according to any of the preceding claims, wherein the opening of the rigid member has a diameter of not more than 150% of the diameter of the hollow needle, preferably not more than 130% of the diameter of the needle.

11. System according to any of the preceding claims, wherein the system comprises at least 4 reactors.

12. System according to any of the preceding claims, wherein each batch reactor can maintain a pressure of at least 20 barg for at least 10 minutes, preferably a pressure of at least 30 barg for 10 minutes, more preferably at least 40 barg for 10 minutes, when pressurized with nitrogen, and even more preferred when pressurized with hydrogen.

13. System according to any of the preceding claims, wherein each reactor comprises a rigid reactor body capable of withstanding pressures of up to 150 barg and optionally a liner made of glass, quartz or polymeric material, preferably the polymeric material being PEEK, PVC, or a fluorinated polymer.

14. Process for performing batch reactions in parallel, which reactions occur under pressurized atmosphere, wherein a plurality of batch reactors is pressurized with the system according to any of claims 1 to 13, and wherein the pressure in the pressurized reactors is between 20 and 150 barg, preferably between 30 and 120 barg, more preferably between 40 and 100 barg.

15. Process according to claim 14, wherein after the pressurising the reactors the contents of the reactors are heated to induce chemical reaction inside the reactors, followed by sample-taking from the reactor content using a hollow needle which has an outer diameter of 2 millimeter or less, and which hollow needle has an opening of the inner canal of the needle, which opening is located at the lateral side of the needle at a distance from the tip of the needle equal or larger than the diameter of the needle, to at most 5 cm from the tip of the needle, and which needle enters the reactor via the septum.

## Patentansprüche

1. System zum Unterdrucksetzen paralleler Batch-Reaktoren, wobei das System eine Vielzahl von Reaktoren und mindestens eine bewegliche Hohlnadel umfasst, die mit einer Druckquelle verbindbar ist, wobei ein Reaktor umfasst:
- einen Reaktorkörper, der ein Volumen von 0,5 bis 50 ml und eine Reaktormündung mit einem Durchmesser zwischen 2 und 30 mm aufweist;
- ein abnehmbares Reaktorverschlusssystem zum Abdecken der Reaktormündung;
und wobei die Hohlnadel einen Außendurchmesser von 2 Millimetern oder weniger aufweist und wobei die Hohlnadel eine Öffnung des Innenkanals der Nadel aufweist, wobei sich die Öffnung sich an der lateralen Seite der Nadel in einem Abstand von der Nadelspitze befindet, der gleich oder größer als der Durchmesser der Nadel ist, bis zu 5 cm von der Nadelspitze,
wobei das abnehmbare Reaktorverschlusssystem zum Abdecken der Reaktormündung umfasst:
- ein Elastomerseptum, das eine Dicke von mindestens 200 % des Durchmessers der Hohlnadel aufweist,
- und ein starres Element, das das Septum an der Reaktormündung mit Ausnahme einer Öffnung in dem starren Element abdeckt, die das Septum der Atmosphäre ausgesetzt lässt, wobei die Öffnung einen Durchmesser von nicht mehr als 200 % des Durchmessers der Hohlnadel aufweist,
wobei das abnehmbare Reaktorverschlusssystem keine beweglichen Teile umfasst und wobei das Elastomerseptum eine Shore-A-Härte von weniger als 75 aufweist.

2. System nach Anspruch 1, abnehmbares Verschlusssystem enthält keine starren Teile, die sich aus einer Position, wenn sie offen ist, zum Unterdrucksetzen des Reaktors in eine andere Position, wenn sie geschlossen ist, nach dem Unterdrucksetzen des Reaktors bewegen oder bewegt werden.

3. System nach Anspruch 1 oder 2, wobei das abnehmbare Reaktorverschlusssystem keine anderen Teile als das Septum und das starre Element und Befestigungsmittel für das starre Element enthält.

4. System nach einem der vorstehenden Ansprüche, wobei die bewegliche Hohlnadel einen Durchmesser von weniger als 1,5 mm, vorzugsweise weniger als 1 mm aufweist.

5. System nach einem der vorstehenden Ansprüche, wobei die Nadel eine Gertie-Marx-Nadel, eine Sprotte-Nadel oder eine Whitacre-Nadel ist.

6. System nach einem der vorstehenden Ansprüche, wobei das Ende der Nadel, die dem Punkt der Nadel gegenüberliegt, an eine Druckgasquelle und/oder eine Vorrichtung zum Probennehmen und/oder Analysieren von gasförmigen oder flüssigen Proben verbindbar ist.

7. System nach einem der vorstehenden Ansprüche, wobei das Elastomerseptum eine Dicke zwischen 300 und 800 % des Durchmessers der Hohlnadel aufweist.

8. System nach einem der vorstehenden Ansprüche, wobei das Elastomerseptum eine Dicke zwischen 2 mm und 10 mm, vorzugsweise zwischen 3 und 6 mm aufweist.

9. System nach einem der vorstehenden Ansprüche, wobei das Elastomerseptum eine Shore-A-Härte von weniger als 73 aufweist.

10. System nach einem der vorstehenden Ansprüche, wobei die Öffnung des starren Elements einen Durchmesser von nicht mehr als 150 % des Durchmessers der Hohlnadel, vorzugsweise nicht mehr als 150 % des Durchmessers der Nadel aufweist.

11. System nach einem der vorstehenden Ansprüche, wobei das System mindestens 4 Reaktoren umfasst.

12. System nach einem der vorstehenden Ansprüche, wobei jeder Batch-Reaktor, wenn mit Stickstoff unter Druck gesetzt, und noch mehr bevorzugt wenn mit Wasserstoff unter Druck gesetzt, einen Druck von mindestens 20 barg für mindestens 10 Minuten, vorzugsweise einen Druck von mindestens 30 barg für 10 Minuten, mehr bevorzugt mindestens 40 barg für 10 Minuten aufrechterhalten kann.

13. System nach einem der vorstehenden Ansprüche, wobei jeder Reaktor einen starren Reaktorkörper, der in der Lage ist, Drücken von bis zu 150 barg standzuhalten, und optional eine Auskleidung, die aus Glas, Quarz oder Polymermaterial hergestellt ist, umfasst, vorzugsweise wobei das Polymermaterial PEEK, PVC oder ein fluoriertes Polymer ist.

14. Verfahren zum parallelen Durchführen von Batch-Reaktionen, wobei die Reaktionen unter einer unter Druck gesetzten Atmosphäre stattfinden, wobei eine Vielzahl von Batch-Reaktoren mit dem System nach einem der Ansprüche 1 bis 13 unter Druck gesetzt werden und wobei der Druck in den unter Druck gesetzten Reaktoren zwischen 20 und 150 barg, vorzugsweise zwischen 30 und 120 barg, mehr bevorzugt zwischen 40 und 100 barg beträgt.

15. Verfahren nach Anspruch 14, wobei nach dem Unterdrucksetzen der Reaktoren die Inhalte der Reaktoren erhitzt werden, um eine chemische Reaktion im Inneren der Reaktoren auszulösen, worauf ein Probennehmen aus dem Reaktorinhalt unter Verwendung einer Hohlnadel erfolgt, die einen Außendurchmesser von 2 Millimetern oder weniger aufweist, und wobei die Hohlnadel eine Öffnung des Innenkanals der Nadel aufweist, wobei sich die Öffnung an der lateralen Seite der Nadel in einem Abstand von der Nadelspitze befindet, der gleich oder größer als der Durchmesser der Nadel ist, bis zu 5 cm von der Nadelspitze, und wobei die Nadel über das Septum in den Reaktor eintritt.

## Revendications

1. Système permettant de mettre sous pression des réacteurs discontinus parallèles, système qui comprend une pluralité de réacteurs et au moins une aiguille creuse déplaçable pouvant être raccordée à une source de pression, dans lequel un réacteur comprend :
- un corps de réacteur ayant un volume de 0,5 à 50 ml et une embouchure de réacteur avec un diamètre compris entre 2 et 30 mm ;
- un système amovible de fermeture de réacteur permettant de couvrir ladite embouchure de réacteur ;
et dans lequel ladite aiguille creuse a un diamètre externe de 2 millimètres ou moins, et cette aiguille creuse a une ouverture du canal interne de l'aiguille, cette ouverture est localisée au niveau du côté latéral de l'aiguille à une distance du bout de l'aiguille égale ou supérieure au diamètre de l'aiguille, jusqu'à au plus 5 cm du bout de l'aiguille,
dans lequel le système amovible de fermeture de réacteur permettant de couvrir ladite embouchure de réacteur comprend :
- un septum élastomère ayant une épaisseur d'au moins 200 % du diamètre de l'aiguille creuse,
- et un élément rigide couvrant le septum au niveau de l'embouchure de réacteur à l'exception d'une ouverture dans l'élément rigide laissant le septum exposé à l'atmosphère, ouverture qui a un diamètre n'excédant pas 200 % du diamètre de l'aiguille creuse,
dans lequel le système amovible de fermeture de réacteur ne comprend aucune pièce en mouvement, et dans lequel le septum élastomère a une dureté Shore A inférieure à 75.

2. Système selon la revendication 1, le système amovible de fermeture ne contient aucune pièce rigide qui se déplace ou est déplacée à partir d'une position lorsqu'il est ouvert pour mettre sous pression le réacteur, jusqu'à une position différente lorsqu'il est fermé après mise sous pression du réacteur.

3. Système selon la revendication 1 ou la revendication 2, dans lequel le système amovible de fermeture de réacteur ne contient aucune pièce autre que le septum et l'élément rigide et un moyen de fixation pour l'élément rigide.

4. Système selon l'une quelconque des revendications précédentes, dans lequel l'aiguille creuse déplaçable a un diamètre inférieur à 1,5 mm, de préférence inférieur à 1 mm.

5. Système selon l'une quelconque des revendications précédentes, dans lequel l'aiguille est une aiguille de Gertie-Marx, une aiguille de Sprotte ou une aiguille de Whitacre.

6. Système selon l'une quelconque des revendications précédentes, dans lequel l'extrémité de l'aiguille opposée à la pointe de l'aiguille peut être raccordée à une source de gaz sous pression et/ou à un dispositif permettant d'échantillonner et/ou d'analyser des échantillons gazeux ou liquides.

7. Système selon l'une quelconque des revendications précédentes, dans lequel le septum élastomère a une épaisseur comprise entre 300 et 800 % du diamètre de l'aiguille creuse.

8. Système selon l'une quelconque des revendications précédentes, dans lequel le septum élastomère a une épaisseur comprise entre 2 mm et 10 mm, de préférence entre 3 et 6 mm.

9. Système selon l'une quelconque des revendications précédentes, dans lequel le septum élastomère a une dureté Shore A inférieure à 73.

10. Système selon l'une quelconque des revendications précédentes, dans lequel l'ouverture de l'élément rigide a un diamètre ne valant pas plus de 150 % du diamètre de l'aiguille creuse, de préférence pas plus de 130 % du diamètre de l'aiguille.

11. Système selon l'une quelconque des revendications précédentes, dans lequel le système comprend au moins 4 réacteurs.

12. Système selon l'une quelconque des revendications précédentes, dans lequel chaque réacteur discontinu peut maintenir une pression d'au moins 20 bar absolus pendant au moins 10 minutes, de préférence une pression d'au moins 30 bar absolus pendant 10 minutes, plus préférablement au moins 40 bar absolus pendant 10 minutes, lorsqu'il est mis sous pression avec de l'azote, et encore plus préférablement lorsqu'il est mis sous pression avec de l'hydrogène.

13. Système selon l'une quelconque des revendications précédentes, dans lequel chaque réacteur comprend un corps de réacteur rigide capable de supporter des pressions allant jusqu'à 150 bar absolus et facultativement un chemisage constitué de verre, de quartz ou de matériau polymère, de préférence le matériau polymère étant PEEK, PVC, ou un polymère fluoré.

14. Procédé permettant de mettre en oeuvre des réactions discontinues en parallèle, réactions qui se produisent dans une atmosphère sous pression, dans lequel une pluralité de réacteurs discontinus est mise sous pression avec le système selon l'une quelconque des revendications 1 à 13, et dans lequel la pression dans les réacteurs sous pression est comprise entre 20 et 150 bar absolus, de préférence entre 30 et 120 bar absolus, plus préférablement entre 40 et 100 bar absolus.

15. Procédé selon la revendication 14, dans lequel après la mise sous pression des réacteurs les contenus des réacteurs sont chauffés pour provoquer une réaction chimique à l'intérieur des réacteurs, suivie par une prise d'échantillon à partir du contenu de réacteur à l'aide d'une aiguille creuse qui a un diamètre externe de 2 millimètres ou moins, et cette aiguille creuse a une ouverture du canal interne de l'aiguille, ouverture qui est localisée au niveau du côté latéral de l'aiguille à une distance du bout de l'aiguille égale ou supérieure au diamètre de l'aiguille, jusqu'à au plus 5 cm du bout de l'aiguille, et cette aiguille entre dans le réacteur par l'intermédiaire du septum.
